# EUROPEAN PATENT SPECIFICATION

(11) **EP 1 570 562 B1**
(45) Date of publication and mention of the grant of the patent: **27.10.2010**
(21) Application number: 03772925.8
(22) Date of filing: 20.11.2003
(51) Int. Cl.: H02K 1/12, H02K 29/00

(54) **BLDC MOTOR FOR WASHING MACHINE**
BÜRSTENLOSER GLEICHSTROMMOTOR FÜR EINE WASCHMASCHINE
MOTEUR SANS BALAIS ET A COURANT CONTINU POUR LAVE-LINGE

(30) Priority: 20.11.2002 KR 2002072439
(43) Date of publication of application: 07.09.2005
(73) Proprietor: LG Electronics Inc., Seoul 150-721 (KR)
(72) Inventor: LIM, Kyoung Suk, Changwon-si, 641-091 Gyeongsangnam-do (KR); SON, Young Bok, 641-060 Gyeongsangnam-do (KR); KIM, Jeong Hun, LG Electr., Digital Appl. Comp., Gyeongsangnam-do, 641-711 (KR); HWANG, Sung Man, Changwon-si, 641-200 Gyeongsangnam-do (KR); LEE, Kwang Won, Patent Research Lab. Group, Changwon-si, Gyeongsangnam-do (KR)
(74) Representative: Schorr, Frank Jürgen
(86) International application number: PCT/KR2003/002505
(87) International publication number: WO 2004/047282

(56) References cited:
- KR-A- 20000 012 926
- KR-B1- 100 238 816

## Description

### Technical Field

The present invention relates to washing machines, and more particularly, to a BLDC motor (Brushless Direct Current Motor) for driving a washing machine.

### Background Art

In general, the washing machine progresses washing, rinsing, and spinning cycles for removing dirt from laundry by using actions of detergent and water. In the washing machines, there are circulating type (pulsating type), agitating type (washing pole type), and drum type washing machines.

Each of above types of washing machines requires a motor for driving the washing machine, most of which is the BLDC motor. The BLDC motor, provided with a stator having a coil wound thereon and a rotor around the stator, for generating a rotating power when power is provided to the stator.

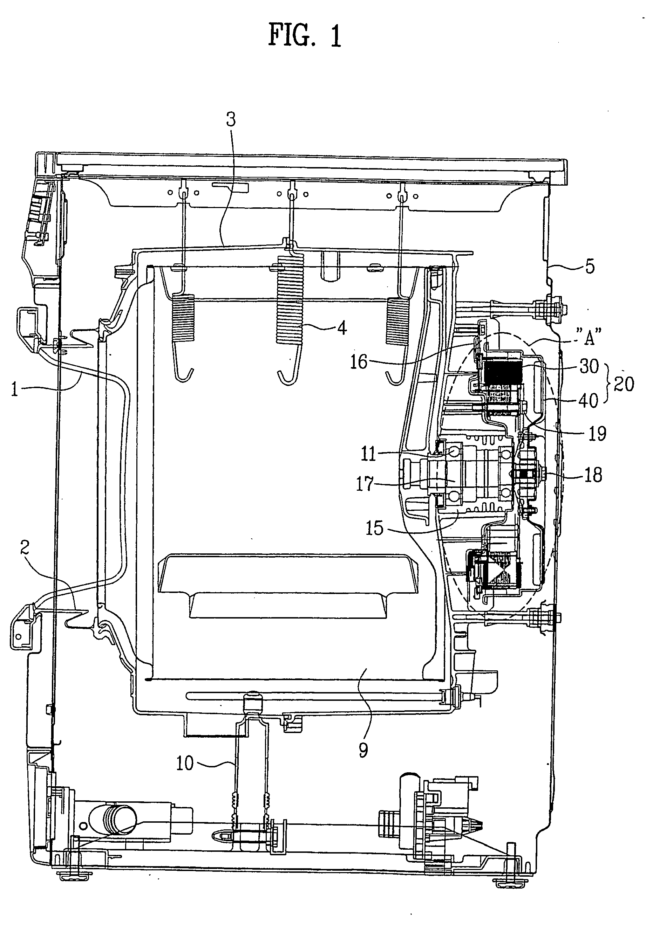

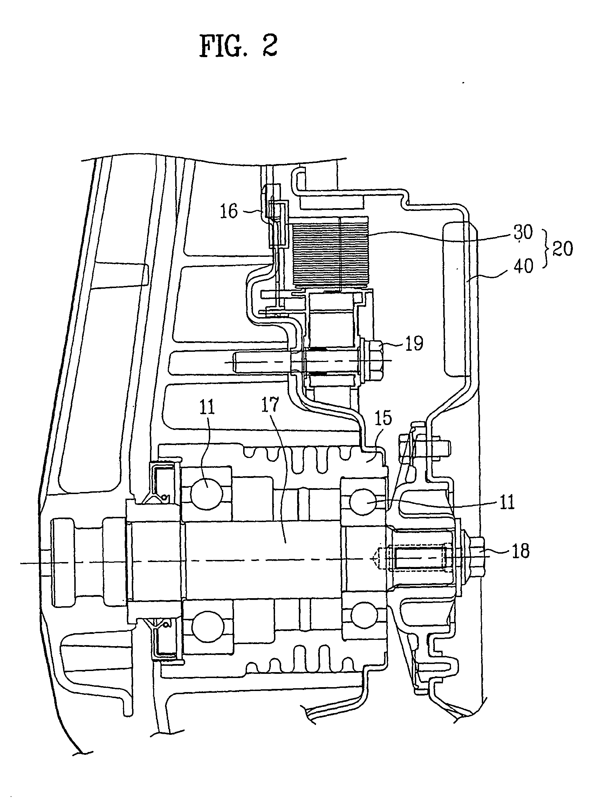

A related art BLDC motor will be described based on the drum type washing machine, briefly. FIG. 1 illustrates a section of a related art drum type washing machine, and FIG. 2 illustrates an enlarged view of 'A' part in FIG. 1.

Referring to FIGS. 1 and 2, there are a tub 3 inside of a cabinet for holding washing water, and a drum 9 inside of the tub 3 for introduction of laundry. There is a drum shaft 7 for transmission of a driving power from a BLDC motor 20 to the drum 9.

There are bearings 11 in front, and rear parts of the drum shaft 17, and a bearing housing 15 in a center part of a rear wall of the tub 3 for supporting the bearings 11. There are a supporting bracket 16 mounted on the tub 3 rear wall, and a stator 30 of the BLDC motor 20 mounted on the supporting bracket 16 with a plurality of bolts 19. There is the rotor 40 of the BLDC motor 20 mounted on a rear end part of the drum shaft 17 with a fastening bolt 18.

In the meantime, there are a door 1 in a front part of the cabinet 5, and a gasket 2 between the door 1 and the tub 3. There are hanging springs 4 between an inside of an upper part of the cabinet 5 and an upper part of an outside circumference of the tub 3, and a friction damper 10 between an inside bottom of the cabinet 5 and a lower part of the outside circumference of the tub 3, for attenuating vibration of the tub occurred during spinning.

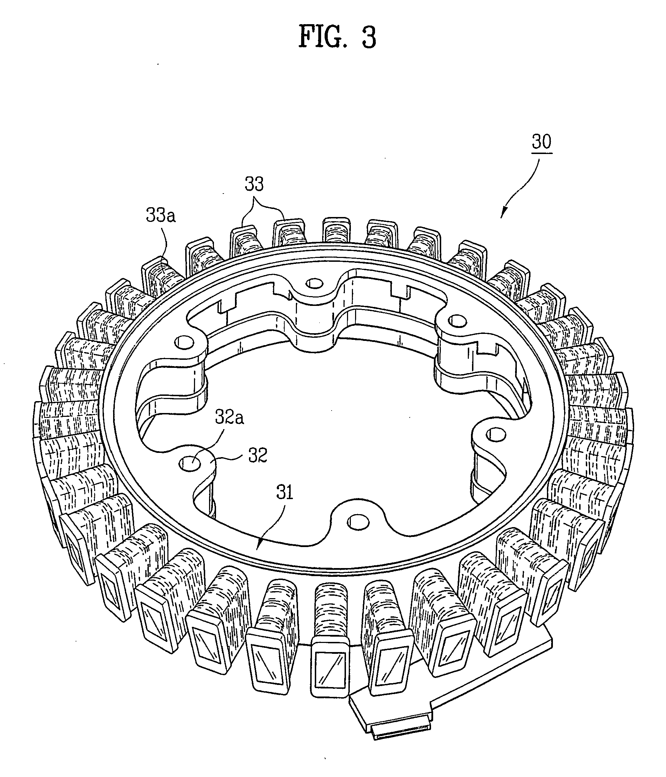

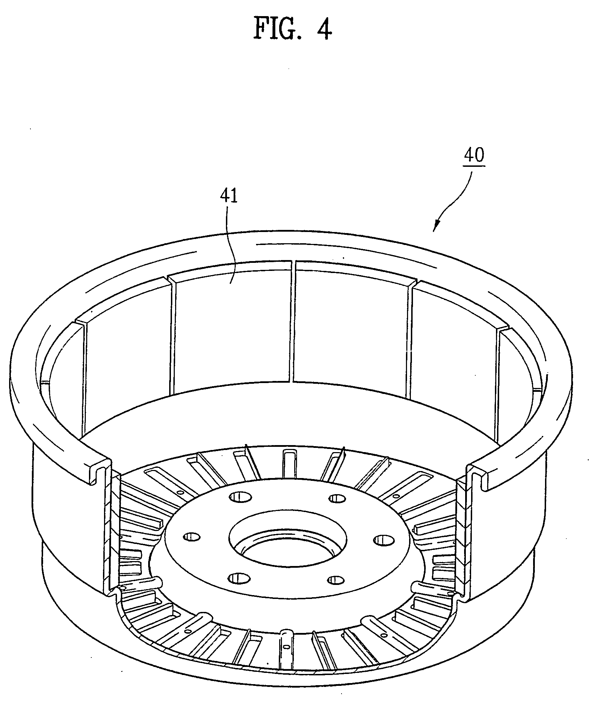

FIG. 3 illustrates a perspective view showing the stator in FIG. 1 or 2 separately, and FIG. 4 illustrates a perspective view showing the rotor in FIG. 1 or 2, separately.

Referring to FIG. 3, the stator 30 is provided with an annular frame 31, and a plurality of core teeth 33 each extended outward from the frame 31 having a coil wound thereon.

There are fastening ribs 32 each formed as a unit with the frame 31 projected toward an inside of the frame 31 having a fastening hole 32a for mounting the stator 30 on a rear wall of the tub 3.

Referring to FIG. 4, the rotor 40 is provided with permanent magnets 41 attached to an inside, and mounted to the rear end part of the drum shaft 17 with the fastening bolt 18. According to this, the drum 9, connected to the rotor 40 directly, is rotated as the drum 9 receives the rotating power from the rotor 40 when the BLDC motor 20 is in operation.

In the drum type washing machine, the rotor 40 is rotated as a power is provided to the stator 30 to form an electric magnet which interacts with the permanent magnets 41 attached to the inside of the rotor 40, and the power transmitted to the drum shaft 17 through the rotor 40 rotates the drum 9, to carry out washing and spinning.

However, the related art drum type washing machine has a problem in that the fast alternation of polarities of the core teeth 33 in driving the BLDC motor 20 causes resonance at a certain rotation speed. Of course, the problem is occurred at other washing machines having the BLDC motor applied thereto.

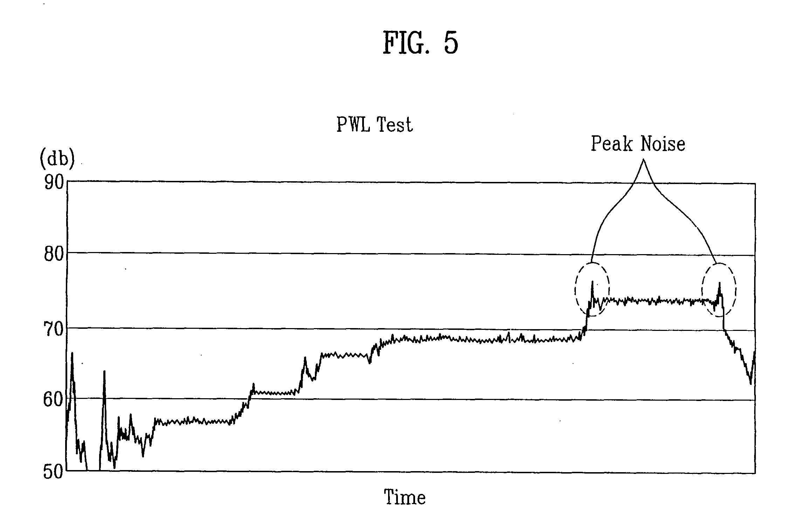

FIG. 5 illustrates a graph showing a result of sound power level test (PWL test) of the related art BLDC motor for the washing machine.

That is, referring to FIG. 5, the washing machine having the related art BLDC motor 20 applied thereto shows peak noises in a range of 76dB caused by resonance at 1360 RPM and 1550 RPM.

Moreover, the high overall noise, a mean value of the noises between the peak noises, in a range of 74dB also drops a reliability of the product.

KR 10-0238816 discloses a motor comprising the features of the preamble of independent claim 1. According to this document, an electrical board is supported by elements located either in-between a T-shaped end portion of a core teeth and the core of a stator or inserted into a slot in the middle of the T-bar of the T-shaped end portion of the core teeth.

### Disclosure of Invention

It is the object of the present invention to solve the foregoing related art problems by preventing peak noise caused by a resonance frequency, and reducing an overall noise of the system.

The above object is solved by the combination of features of independent claim 1. Preferred embodiments are defined in the dependent claims.

There is provided a brushless DC motor for a washing machine including a stator including a frame, a core in the frame, and a plurality of core teeth each extended outward from the frame and having a coil wound thereon, a rotor mounted to surround the core teeth, and rotatable when power is provided to the stator, and at least one supporting member inserted between core teeth for supporting the core teeth.

The supporting member is inserted between ends of the core teeth, or fabricated to make uniform contact with the core teeth.

The supporting member is fabricated to fit to a space between the core teeth perfectly, or has a width the same with a space between the core teeth.

The supporting member is fabricated to be press fit in a space between the core teeth, or has a width greater than a space between the core teeth.

The supporting member is a plate member connected between the core teeth. The supporting member is more than one connected to each other with a rim.

The rim is one member for connecting all the supporting members at a time, or the rim includes a plurality of members each for connecting some of the supporting members.

The supporting member has at least one through hole in a rectangular form. The supporting member includes two through holes arranged in a vertical direction.

The supporting member is formed of a non-magnetic material. It is preferable that the supporting member is formed of a plastic, such as ABS (acrylonitrile butadiene styrene copolymer).

### Brief Description of Drawings

The accompanying drawings, which are included to provide a further understanding of the invention, illustrate embodiment(s) of the invention and together with the description serve to explain the principle of the invention. In the drawings;
FIG. 1 illustrates a section of a related art drum type washing machine;
FIG. 2 illustrates an enlarged view of 'A' part in FIG. 1;
FIG. 3 illustrates a perspective view showing the stator in FIG. 1 or 2 separately;
FIG. 4 illustrates a perspective view showing the rotor in FIG. 1 or 2, separately;
FIG. 5 illustrates a graph showing a result of sound power level test (PWL test) of a related art BLDC motor for the washing machine;
FIG. 6 illustrates a perspective view showing a stator in accordance with a preferred embodiment of the present invention;
FIG. 7 illustrates a perspective view showing a rotor in accordance with a preferred embodiment of the present invention;
FIG. 8 illustrates a perspective view of a supporting member in accordance with a preferred embodiment of the present invention; and
FIG. 9 illustrates a graph showing a result of sound power level test (PWL test) of a BLDC motor in accordance with a preferred embodiment of the present invention.

### Best Mode for Carrying Out the Invention

Reference will now be made in detail to the preferred embodiments of the present invention, examples of which are illustrated in the accompanying drawings.

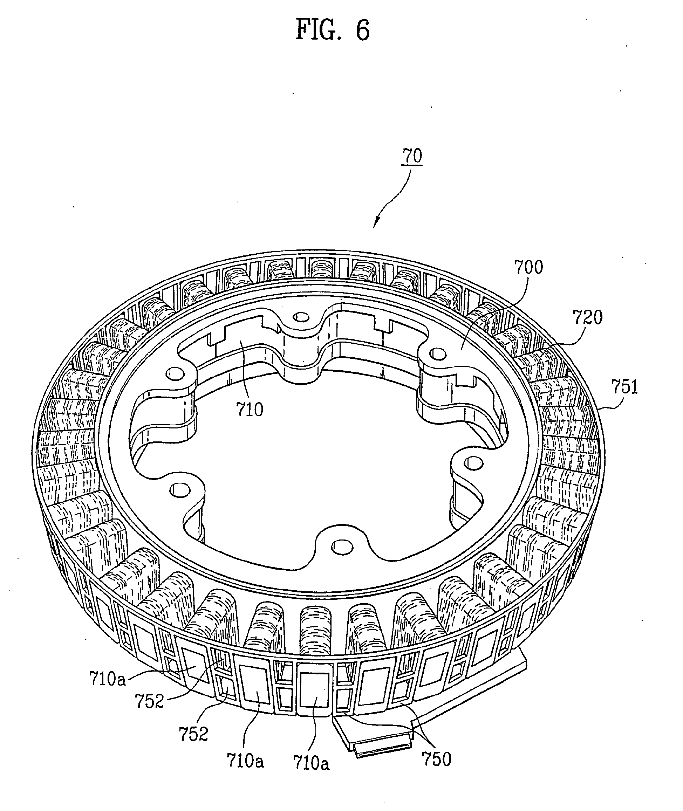

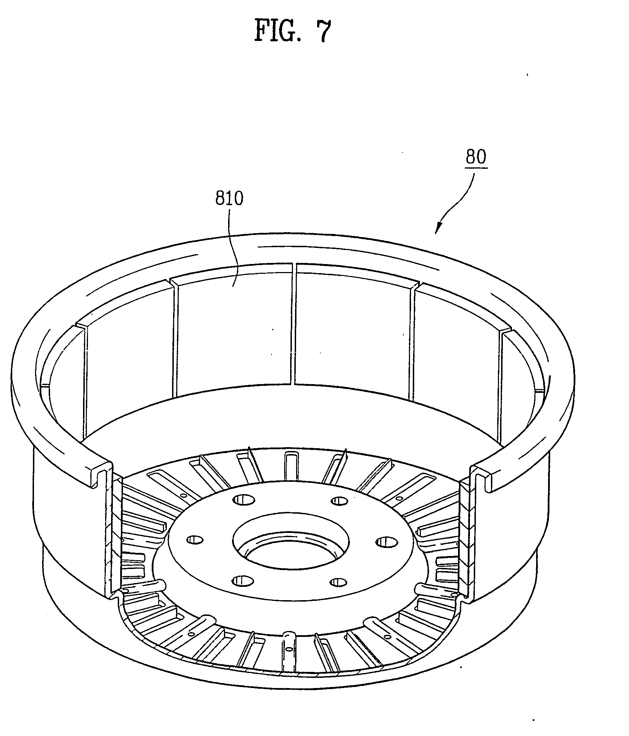

FIG. 6 illustrates a perspective view showing a stator in accordance with a preferred embodiment of the present invention, and FIG. 7 illustrates a perspective view showing a rotor in accordance with a preferred embodiment of the present invention.

Referring to FIGS. 6 and 7, the BLDC motor for a washing machine includes a stator 70, and a rotor 80 around the stator 70.

The stator 70 includes a frame 700, a core 710 in the frame 700, and a plurality of core teeth 710a each extended outward from the frame 700 and having a coil wound thereon.

The rotor 80 includes a plurality of permanent magnets 810 surrounding the core teeth 710a, and is mounted so as to be rotatable when power is provided to the stator 70.

Moreover, the BLDC motor further includes at least one supporting member 750 inserted between the core teeth 710a for supporting the core teeth 710a. The supporting member 750 prevents the core teeth 710a from vibrating when the BLDC motor is driven.

For this, the supporting member 750 is inserted between ends of the core teeth 710a at which the vibration is the most intensive. Moreover, it is preferable that the supporting member 750 makes uniform contact with the core teeth 710a.

Meanwhile, the supporting member 750 shall be fabricated to fit between the core teeth 710a perfectly, for firmer supporting of the core teeth 710a. The supporting member 750 may be fabricated to press fit between the core teeth 710a.

The supporting member 750 may have a width the same with, or greater than a space between adjacent core teeth 710a.

The foregoing supporting member 750 will be described in more detail.

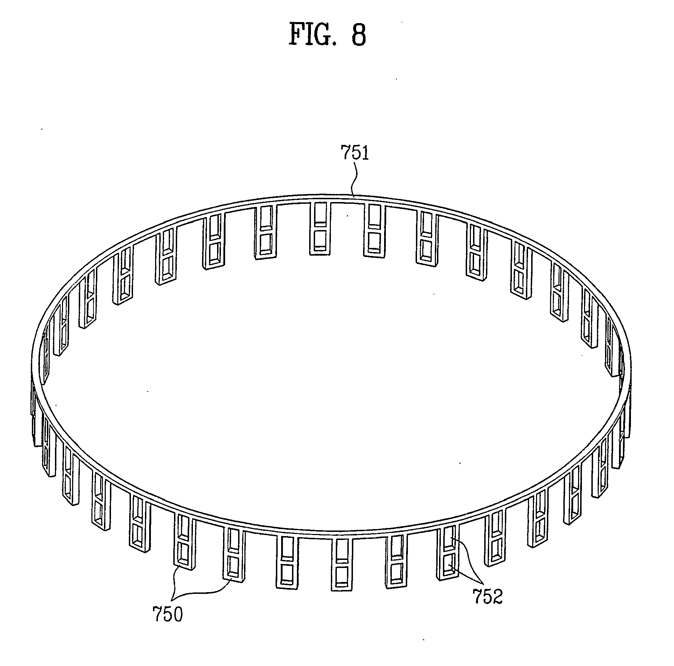

FIG. 8 illustrates a perspective view of a supporting member in accordance with a preferred embodiment of the present invention.

Referring to FIG. 8, the supporting member 750 includes a plate member for connecting the core teeth 710a. The supporting member is inserted between the core teeth 710a for preventing the core teeth from vibrating.

Meanwhile, if there are more than two supporting members 750, the supporting members 750 are connected to each other with a rim 751. In this instance, the rim 751 is one member that connects all the supporting members 750 at a time.

Once the supporting members 750 are connected with one rim 751, the supporting members 750 can be inserted between the core teeth 710a at a time.

The supporting member 750 includes at least one through hole 752. The through hole 752 is rectangular, and provides a space in which the supporting member 750 can be deformed elastically according to vibration of he core teeth 710a. Accordingly, the vibration of the core tooth 710a can be attenuated more effectively by the through hole 752.

Moreover, the supporting member 750 may have two through holes 752. In this instance, it is preferable that the through holes 752 are arranged in a vertical direction. Of course, there can be many variations of the through hole 752, such that the through hole 752 may be two or more than two circular holes.

In the meantime, the supporting member 750 is formed of a non-magnetic material, otherwise the supporting member 750 is magnetized, and impedes operation of the motor. Accordingly, it is preferable that the supporting member 750 is formed of a plastic, such as ABS (acrylonitrile butadiene styrene copolymer).

The operation of the BLDC motor for a washing machine of the present invention will be described.

When the BLDC motor is in operation, a polarity of each of core teeth 710a of the stator 70 alternates at a fast speed, to cause vibration of each of the core teeth 710a.

However, vibration of the core teeth 710a of the stator 70 in the BLDC motor of the present invention, braced with the supporting member 750, is suppressed. According to this, vibration of the stator 70 is also reduced, to permit to avoid peak noise caused by a system resonance.

That is, the BLDC motor of the present invention can suppress the vibration by means of the supporting member 750 that is inserted between, and braces the core teeth 710a of the stator 70.

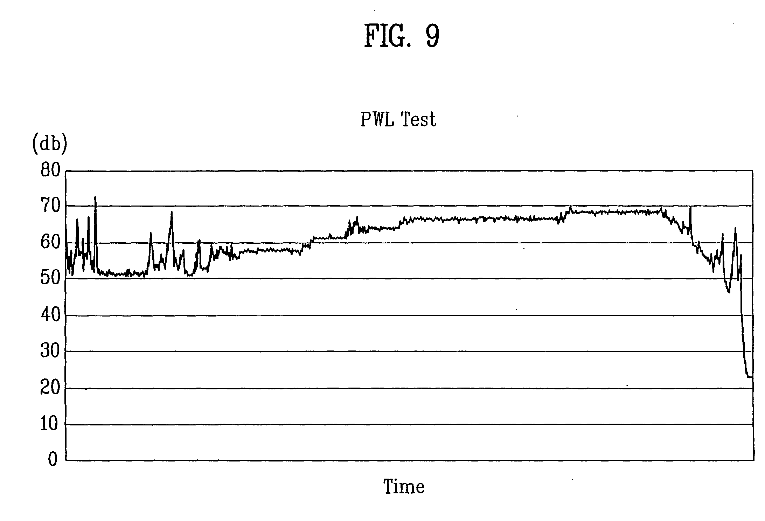

FIG. 9 illustrates a graph showing a result of sound power level test (PWL test) of a BLDC motor in accordance with a preferred embodiment of the present invention.

Referring to FIG. 9, it can be noted that the noise is dropped to a 68dB level from 76dB in the related art as a result of application of the BLDC motor of the present invention. Moreover, it can be noted that the system overall noise is also reduced when the BLDC motor of the present invention is applied.

That is, the related art BLDC motor shows the overall noise value in a range of 74dB as the core teeth 710a of the stator 70 vibrate. However, it can be noted that, as the core teeth 710a of the stator 70 of the present invention are braced with the supporting member 750, to suppress the vibration, the overall noise value is in a range of 65dB level.

It will be apparent to those skilled in the art that various modifications and variations can be made in the present invention without departing from the spirit or scope of the invention. Thus, it is intended that the present invention cover the modifications and variations of this invention provided they come within the scope of the appended claims.

### Industrial Applicability

The supporting member 750 on the stator 70 prevents vibration of the core teeth 710a caused by alternation of polarities in driving the motor.

Moreover, the peak noise coming from the system resonance caused by vibration of the core teeth 710a is suppressed, and the overall noise is also reduced. At the end, the BLDC motor reduces an overall noise of the washing machine, and enhances product reliability.

## Claims

1. A brushless DC motor for a washing machine comprising:
a stator (70) including a frame (700), a core (710) in the frame (700), and a plurality of core teeth (710a) each extended outward from the frame (700) and having a coil wound thereon; and
a rotor (80) mounted to surround the core teeth (710a), and rotatable when power is provided to the stator (70); and
at least one supporting member (750) inserted between core teeth (710a) for supporting the core teeth (710a),
wherein the supporting member (750) has at least one through hole (752),
**characterised in that**
the motor includes a rim (751) for connecting all the supporting members (750) at a time,
wherein the supporting member (750) is inserted between ends of the core teeth (710a),
wherein the supporting member (750) is fabricated to fit to a space between the core teeth (710a) perfectly, and
wherein the rim (751) and the supporting member (750) is formed of a non-magnetic material.

2. The brushless DC motor as claimed in claim 1,
wherein the supporting member (750) is fabricated to make uniform contact with the core teeth (710a).

3. The brushless DC motor as claimed in one of the preceding claims,
wherein the supporting member (750) has a width the same as a space between the core teeth (710a).

4. The brushless DC motor as claimed in claim 1 or 2,
wherein the supporting member (750) is fabricated to be press fit in a space between the core teeth (710a).

5. The brushless DC motor as claimed in claim 1, 2 or 4,
wherein the supporting member (750) has a width greater than a space between the core teeth (710a).

6. The brushless DC motor as claimed in one of the preceding claims,
wherein the supporting member (750) is a plate member connected between the core teeth (710a).

7. The brushless DC motor as claimed in one of the preceding claims,
wherein the rim (751) includes a plurality of members each for connecting some of the supporting members (750).

8. The brushless DC motor as claimed in one of the preceding claims,
wherein the through hole (752) is rectangular.

9. The brushless DC motor as claimed in one of the preceding claims,
wherein the supporting member (750) includes two through holes (752).

10. The brushless DC motor as claimed in claim 9,
wherein the through holes (752) are arranged in a vertical direction.

11. The brushless DC motor as claimed in one of the preceding claims,
wherein the rim (751) and the supporting member (750) are formed of a plastic.

12. The brushless DC motor as claimed in claim 11,
wherein the rim (751) and the supporting member (750) are formed of an acrylonitrile butadiene styrene copolymer.

## Patentansprüche

1. Bürstenloser Gleichstrommotor für eine Waschmaschine, aufweisend:
einen Stator (70) mit einem Rahmen (700), einem Kern (710) in dem Rahmen (700) und mehreren Kernzähnen (710a), die jeder von dem Rahmen (700) nach außen verlaufen und eine Spule darum gewickelt aufweisen; und
einen Rotor (80), der zum Umgeben der Kernzähne (710a) angebracht ist und drehbar ist, wenn der Stator (70) mit Strom versorgt ist; und
zumindest ein Stützglied (750), das zum Stützen der Kernzähne (710a) zwischen Kernzähnen (710a) eingefügt ist,
wobei das Stützglied (750) zumindest ein Durchgangsloch (752) aufweist,
**dadurch gekennzeichnet, dass**
der Motor einen Rand (751) zum Verbinden aller der Stützglieder (750) auf einmal umfasst,
wobei das Stützglied (750) zwischen Enden der Kernzähne (710a) eingefügt ist,
wobei das Stützglied (750) zum einwandfreien Passen in einem Zwischenraum zwischen den Kernzähnen (710a) gefertigt ist, und
wobei der Rand (751) und das Stützglied (750) aus einem nichtmagnetischen Material gebildet sind.

2. Bürstenloser Gleichstrommotor gemäß Anspruch 1, wobei das Stützglied (750) zum Herstellen von gleichmäßigem Kontakt mit den Kernzähnen (710a) gefertigt ist.

3. Bürstenloser Gleichstrommotor gemäß einem der vorhergehenden Ansprüche, wobei das Stützglied (750) eine Breite aufweist, die dieselbe wie ein Zwischenraum zwischen den Kernzähnen (710a) ist.

4. Bürstenloser Gleichstrommotor gemäß einem der Ansprüche 1 oder 2, wobei das Stützglied (750) für einen Presssitz in einen Zwischenraum zwischen den Kernzähnen (710a) gefertigt ist.

5. Bürstenloser Gleichstrommotor gemäß einem der Ansprüche 1, 2 oder 4, wobei das Stützglied (750) eine Breite aufweist, die größer als ein Zwischenraum zwischen den Kernzähnen (710a) ist.

6. Bürstenloser Gleichstrommotor gemäß einem der vorhergehenden Ansprüche, wobei das Stützglied (750) ein Plattenglied ist, das zwischen den Kernzähnen (710a) eingekoppelt ist.

7. Bürstenloser Gleichstrommotor gemäß einem der vorhergehenden Ansprüche, wobei der Rand (751) mehrere Glieder umfasst, die jedes zum Verbinden von einigen der Stützglieder (750) dienen.

8. Bürstenloser Gleichstrommotor gemäß einem der vorhergehenden Ansprüche, wobei das Durchgangsloch (752) rechteckig ist.

9. Bürstenloser Gleichstrommotor gemäß einem der vorhergehenden Ansprüche, wobei das Stützglied (750) zwei Durchgangslöcher (752) aufweist.

10. Bürstenloser Gleichstrommotor gemäß Anspruch 9, wobei die Durchgangslöcher (752) in einer vertikalen Richtung angeordnet sind.

11. Bürstenloser Gleichstrommotor - gemäß einem der vorhergehenden Ansprüche, wobei der Rand (751) und das Stützglied (750) aus Kunststoff gebildet sind.

12. Bürstenloser Gleichstrommotor gemäß Anspruch 11, wobei der Rand (751) und das Stützglied (750) aus Acrylnitril-Butadien-Styrol-Copolymer gebildet sind.

## Revendications

1. Moteur à courant continu sans balai pour machine à laver, comprenant :
un stator (70) incluant une carcasse (700), un noyau (710) dans la carcasse (700) et une pluralité de dents de noyau (710a) qui, chacune, s'étendent vers l'extérieur depuis la carcasse (700) et sont entourées d'un bobinage ; et
un rotor (80) monté pour entourer les dents de noyau (710a) et qui est adapté à tourner lorsque de l'énergie est fournie au stator (70) ; et
au moins un élément support (750) inséré entre les dents de noyau (710a) pour supporter les dents de noyau (710a),
l'élément support (750) ayant au moins un trou traversant (752),
**caractérisé en ce que**
le moteur inclut une jante (751) pour connecter tous les éléments supports (750) à la fois,
l'élément support (750) étant inséré entre les extrémités des dents de noyau (710a),
l'élément support (750) étant fabriqué pour s'adapter parfaitement dans un espace entre les dents de noyau (710a), et
la jante (751) et l'élément support (750) étant formés d'un matériau non-magnétique.

2. Moteur à courant continu sans balai tel que revendiqué dans la revendication 1,
dans lequel l'élément support (750) est fabriqué pour réaliser un contact uniforme avec les dents de noyau (710a).

3. Moteur à courant continu sans balai tel que revendiqué dans l'une des revendications précédentes,
dans lequel l'élément support (750) a une largeur égale à un espace entre les dents de noyau (710a).

4. Moteur à courant continu sans balai tel que revendiqué dans la revendication 1 ou 2,
dans lequel l'élément support (750) est fabriqué pour être monté à la presse dans un espace entre les dents de noyau (710a).

5. Moteur à courant continu sans balai tel que revendiqué dans la revendication 1, 2 ou 4,
dans lequel l'élément support (750) a une largeur supérieure à un espace entre les dents de noyau (710a).

6. Moteur à courant continu sans balai tel que revendiqué dans l'une des revendications précédentes,
dans lequel l'élément support (750) est un élément formant plaque connecté entre les dents de noyau (710a).

7. Moteur à courant continu sans balai tel que revendiqué dans l'une des revendications précédentes,
dans lequel la jante (751) inclut une pluralité d'éléments dont chacun est destiné à connecter quelques-uns des éléments supports (750).

8. Moteur à courant continu sans balai tel que revendiqué dans l'une des revendications précédentes,
dans lequel le trou traversant (752) est rectangulaire.

9. Moteur à courant continu sans balai tel que revendiqué dans l'une des revendications précédentes,
dans lequel l'élément support (750) inclut deux trous traversants (752).

10. Moteur à courant continu sans balai tel que revendiqué dans la revendication 9,
dans lequel les trous traversants (752) sont agencés tel que revendiqué dans une direction verticale.

11. Moteur à courant continu sans balai tel que revendiqué dans l'une des revendications précédentes,
dans lequel la jante (751) et l'élément support (750) sont formés d'un plastique.

12. Moteur à courant continu sans balai tel que revendiqué dans la revendication 11,
dans lequel la jante (751) et l'élément support (750) sont formés d'un copolymère acrylonitrile-butadiène-styrène.
